# DEMANDE DE BREVET EUROPEEN

(11) **EP 0 756 394 A2**
(43) Date de publication de la demande: **29.01.1997**
(21) Numéro de dépôt: 96401674.5
(22) Date de dépôt: 25.07.1996
(51) Int. Cl.: H04J 3/06

(54) **Procédé et dispositif de synchronisation d'horloges d'encodeurs et décodeurs numériques**

(30) Priorité: 28.07.1995 FR 9509261
(71) Demandeur: THOMSON multimedia, 92050 Paris La Défense (FR)
(72) Inventeur: Rambault, Claude, 92050 Paris la Defense Cedex (FR); Bassi, Thierry, 92050 Paris la Defense Cedex (FR)
(74) Mandataire: Ruellan-Lemonnier, Brigitte

(57) **Abrégé**

L'invention a pour objet un procédé de synchronisation d'horloges mis en oeuvre dans un système comportant un décodeur numérique d'un récepteur muni d'une horloge d'échantillonnage et un encodeur numérique d'un émetteur également muni d'une horloge d'échantillonnage.

Ledit procédé comprend les étapes:
au niveau de l'émetteur, de codage par paquets d'échantillons d'un signal par intervalles de temps de durée déterminée,
de déclenchement de l'émission d'une trame de données lorsqu'un paquet de données est prêt à être émis,
au niveau du récepteur, de détection dudit début de trame et
de génération d'un signal de référence suite à ladite détection, ledit signal étant employé pour corriger l'horloge (18) du récepteur.

L'invention a aussi pour objet un procédé de synchronisation d'horloges mis en oeuvre dans un système comportant un décodeur numérique d'un récepteur muni d'une horloge d'échantillonnage et un encodeur numérique d'un émetteur également muni d'une horloge d'échantillonnage, l'émetteur émettant des trames contenant paquets de données correspondant à un nombre connu d'échantillons

Ledit procédé comprend les étapes: dans le récepteur
- de réception d'une trame de données comprenant un paquet de données,
- de décodage dudit paquet et d'écriture des données décodées dans une mémoire (23),
- de lecture desdites données décodées dans ladite mémoire (23) à une fréquence fonction de la fréquence de ladite horloge du décodeur,
- de comparaison de l'état de remplissage de ladite mémoire (23) par rapport à un seuil à un instant déterminé des données dans ladite mémoire (23),
- de correction de ladite horloge (18) du décodeur en fonction du résultat de ladite comparaison.

L'invention s'applique dans le domaine de la transmission numérique et plus particulièrement à la transmission entre visiophones numériques.

## Description

L'invention concerne des procédés et dispositifs de synchronisation d'horloges d'encodeurs et décodeurs numériques, et est destinée notamment à l'application aux encodeurs/décodeurs audio de visiophones.

Dans des systèmes de transmission de données de types différents (images vidéo, voix, données autres), un multiplexage de ces données est réalisé. De plus, la bande passante disponible étant généralement réduite, on a recours à une compression des données audio et/ou vidéo.

Au niveau du décodeur se pose alors le problème de la restitution des données audio de la manière la plus fidèle et naturelle possible. On cherchera notamment à rétablir une horloge d'échantillonnage audio la plus proche possible de celle de l'encodeur. En effet, si l'horloge du décodeur a une fréquence plus faible que celle de l'encodeur, certains échantillons seront omis, tandis que dans le cas où l'horloge du décodeur a une fréquence plus élevée que celle de l'encodeur, certains échantillons seront répétés.

Dans les deux cas, les défauts peuvent être audibles et donc dégrader la qualité de la restitution.

L'invention a pour objet un procédé de synchronisation d'horloges caractérisé en ce que, dans un système comportant un décodeur numérique d'un récepteur muni d'une horloge d'échantillonnage et un encodeur numérique d'un émetteur également muni d'une horloge d'échantillonnage, ledit procédé comprend les étapes:
au niveau de l'émetteur, de codage par paquets d'échantillons d'un signal par intervalles de temps de durée déterminée,
de déclenchement de l'émission d'une trame de données lorsqu'un paquet de données est prêt à être émis,
au niveau du récepteur, de détection dudit début de trame et
de génération d'un signal de référence suite à ladite détection, ledit signal étant employé pour corriger l'horloge du récepteur.

Selon une variante de réalisation, ledit signal échantillonné est un signal audio.

Selon une variante de réalisation, la détection de la fin de l'encodage d'un paquet de données audio déclenche l'interruption de la transmission d'une trame précédente et l'émission d'une nouvelle trame.

Selon une variante de réalisation, une trame comprend au moins un drapeau d'identification de trame, un en-tête et un paquet de données audio.

Selon une variante de réalisation, ladite détection du début de trame est réalisée par la détection dudit drapeau d'identification.

Selon une variante de réalisation, ledit signal de référence n'est généré que si l'analyse de l'en-tête ou d'un autre élément de la trame révèle qu'elle contient des données audio.

Selon une variante de réalisation, ledit signal de référence est une impulsion envoyée à une boucle de verrouillage de phase délivrant ladite horloge.

Selon une variante de réalisation, des bits de bourrage étant introduits dans la trame lors de la transmission et éliminés après réception, les signaux de référence subissent un filtrage passe-bas en amont de la boucle à verrouillage de phase.

L'invention a aussi pour objet un procédé, dans un système comportant un décodeur numérique d'un récepteur muni d'une horloge d'échantillonnage et un encodeur numérique d'un émetteur également muni d'une horloge d'échantillonnage, l'émetteur émettant des trames contenant paquets de données correspondant à un nombre connu d'échantillons, ledit procédé comprenant les étapes :
dans le récepteur
- de réception d'une trame de données comprenant un paquet de données,
- de décodage dudit paquet et d'écriture des données décodées dans une mémoire,
- de lecture desdites données décodées dans ladite mémoire à une fréquence fonction de la fréquence de ladite horloge du décodeur,
- de comparaison de l'état de remplissage de ladite mémoire par rapport à un seuil à un instant déterminé des données dans ladite mémoire,
- de correction de ladite horloge du décodeur en fonction du résultat de ladite comparaison.

Selon une variante de réalisation, les paquets de données correspondant à des échantillons d'un signal audio échantillonné à la fréquence de l'horloge d'échantillonnage de l'émetteur.

Selon une variante de réalisation, ledit instant déterminé est choisi indépendamment de l'horloge d'échantillonnage du récepteur.

Selon une variante de réalisation, une trame de données comprend un drapeau d'identification de trame, un en-tête et un paquet de données audio.

Selon une variante de réalisation, ledit seuil de comparaison correspond à la taille d'un paquet audio décodé.

Selon une variante de réalisation, la taille de la mémoire correspond à la taille de deux paquets de données audio décodées.

Selon une variante de réalisation, l'état de remplissage de la mémoire est déterminé en faisant la différence entre un compteur d'écriture et un compteur de lecture associés à ladite mémoire.

Selon une variante de réalisation, l'instant auquel ladite comparaison est effectuée est l'instant où le paquet de données audio est prêt à être décodé.

Selon une variante de réalisation, ladite correction a pour effet de ralentir l'horloge lorsque l'état de remplissage de la mémoire est en dessous dudit seuil et de l'accélérer lorsque l'état de remplissage du buffer est au dessus dudit seuil.

Selon une variante de réalisation, l'horloge du récepteur est générée par une boucle à verrouillage de phase.

L'invention a aussi pour objet un dispositif de réception de signaux audio numériques caractérisé en ce qu'au niveau de l'émetteur, un codage par paquets d'échantillons d'un signal est réalisé, chaque paquet correspondant à un nombre connu d'échantillons, le déclenchement de l'émission d'une trame de données étant réalisé lorsqu'un paquet de données est prêt à être transmis,
ledit dispositif comprenant :
un circuit de détection du début d'une trame de données comportant un desdits paquets,
un circuit de génération d'un signal de référence à partir de ladite détection,
une horloge corrigée par ledit signal de référence.

Selon une variante de réalisation, ledit circuit de détection comprend un circuit de comparaison entre les données reçues et un drapeau d'identification de trame contenu dans lesdites trames.

Selon une variante de réalisation, lesdits échantillons sont des échantillons d'un signal audio échantillonné.

Selon une variante de réalisation, ledit circuit de génération comprend un microprocesseur générant une impulsion en cas de détection d'un drapeau d'identification de trame, si l'en-tête de la trame indique qu'elle contient un desdits paquets.

Selon une variante de réalisation, ledit circuit de génération comprend un circuit de comparaison, suite à la détection d'un drapeau d'identification de trame, entre l'en-tête d'une trame et une ou plusieurs valeurs particulières dudit en-tête indiquant que la trame contient des paquets de données audio, le signal de référence comprenant une impulsion générée lorsque ladite comparaison est positive.

Selon une variante de réalisation, ladite horloge du dispositif de réception comprend une boucle à verrouillage de phase dont l'entrée reçoit ledit signal de référence, ladite boucle comprenant un diviseur dans sa boucle de retour, le facteur de division dudit diviseur étant égal au produit entre la durée des échantillons d'un paquet de données audio et la fréquence de l'horloge de l'émetteur.

L'invention a aussi pour objet un dispositif de réception de signaux numériques caractérisé en ce qu' au niveau de l'émetteur, un codage par paquets d'échantillons d'un signal est réalisé, chaque paquet correspondant à un nombre identique d'échantillons,
ledit dispositif comprenant:
- des moyens de décodage desdits paquets,
- des moyens d'écriture (des échantillons décodés dans une mémoire,
- des moyens de lectures desdits échantillons dans ladite mémoire,
- des moyens de comparaison, à des instants déterminés, de l'état de remplissage de ladite mémoire par rapport à un seuil,
- des moyens de correction de l'horloge du récepteur en fonction du résultat de ladite comparaison.

Selon une variante de réalisation, lesdits échantillons sont des échantillons d'un signal audio.

Selon une variante de réalisation, la comparaison est effectuée à des instants indépendants de ladite horloge d'échantillonnage.

Selon une variante de réalisation, la fréquence de lecture des échantillons décodés dans la mémoire est la fréquence de l'horloge d'échantillonnage.

Selon une variante de réalisation, lesdits moyens de décodage, d'écriture et de comparaison comprennent un processeur de traitement du signal.

Selon une variante de réalisation, l'horloge d'échantillonnage du récepteur est générée à partir d'une boucle à verrouillage de phase.

D'autres caractéristiques de l'invention apparaîtront à travers la description de deux exemples de réalisation particuliers non limitatifs illustrés par les figures jointes parmi lesquelles :
- la figure 1a est un diagramme illustrant la constitution du multiplex élaboré par l'encodeur,
- la figure 1b est un chronogramme indiquant par rapport à la figure 1a la détection d'un drapeau au niveau de l'encodeur suivant le premier exemple de réalisation,
- la figure 1c est un chronogramme indiquant par rapport à la figure 1a l'impulsion de synchronisation d'une boucle à verrouillage de phase suivant le premier exemple de réalisation,
- la figure 2 est un diagramme bloc d'un encodeur et d'un décodeur conforme au premier exemple de réalisation,
- la figure 3 est un diagramme bloc des circuit de synchronisation d'un décodeur conforme au second exemple de réalisation,
- la figure 4 est une courbe illustrant l'évolution du remplissage de la mémoire tampon de sortie du décodeur conforme au second exemple de réalisation,
- la figure 5a illustre la gigue introduite par la mise en oeuvre du premier exemple de réalisation,
- la figure 5b illsutre la gigue introduite par la mise en oeuvre du second exemple de réalisation.

Dans ce qui suit, on supposera que le signal audio analogique est échantillonné à une fréquence de 8 kHz. Les échantillons sont regroupés en paquets de 240 échantillons à raison d'un paquet toutes les 30 ms. La durée des échantillons d'un paquet est donc toujours la même. Ces paquets d'échantillons sont compressés par un circuit de compression de l'encodeur, la compression étant réalisée, dans le cadre des exemples de réalisation, par l'intermédiaire d'un algorithme de type MP-MLQ (pour "Multi-Pulse Maximum Likelihood Quantization" ou multi-impulsion et quantification de plus grande vraisemblance en français).

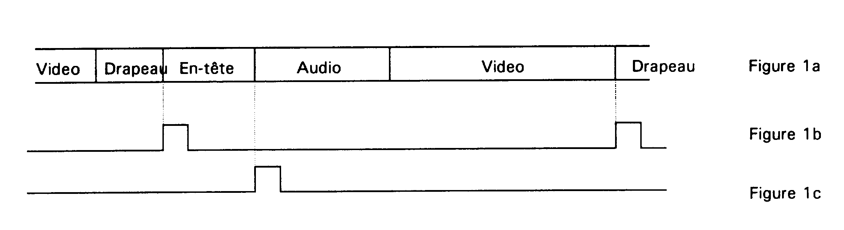

La figure 1a illustre la constitution du multiplex généré par l'encodeur. Une trame dite trame HDLC (pour "High level Data Link Control" ou encore contrôle de liaison de données de haut niveau en français) comporte un drapeau d'identification de la trame, suivi d'un en-tête, lui-même suivi de données vidéo compressées et de données audio compressées. La trame peut également comprendre d'autres types de données (informations ou données de contrôle).

Dans un premier temps, nous allons nous attacher à la description du premier exemple de réalisation. Etant donné que de nombreux éléments en commun existent entre le premier et le second exemple, la description de ce dernier fera souvent référence à la description du premier et on insistera surtout sur les différences entre les deux exemples.

Dans les deux exemples de réalisation, une boucle à verrouillage de phase est utilisée pour générer l'horloge d'échantillonage. Il est bien entendu que cette boucle à verrouillage de phase peut être implémentée par un logiciel qu'exécuterait le microprocesseur qui sera décrit ci-dessous, même si les éléments fonctionnels d'une boucle à verrouillage de phase sont décrits de manière indépendante dans ce qui suit.

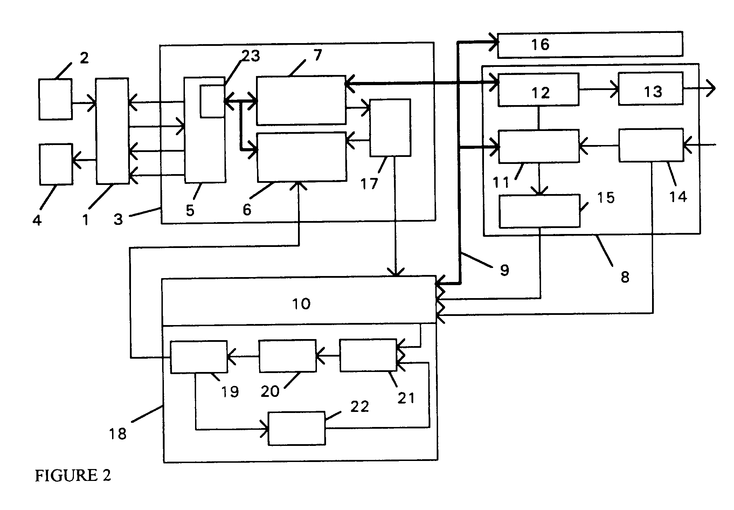

La figure 2 est un diagramme bloc des circuits d'encodage et de décodage audio d'un visiophone. Le dispositif comporte un convertisseur numérique-analogique et analogique-numérique 1, réalisant la conversion analogique-numérique du signal en provenance d'un microphone 2 ou la conversion numérique-analogique des échantillons audio en provenance du codec audio 3. Le signal analogique résultant de cette dernière conversion est transmis à un haut-parleur 4.

Le codec 3 comporte une interface série 5 communicant avec le convertisseur 1 à travers quatre connexions: une horloge d'échantillonnage, une horloge de transmission, une entrée et une sortie de données numériques. Le codec comprend en outre un processeur de traitement digital des signaux (ou "DSP") 6 qui est relié aussi bien à l'interface série 5 qu'à une RAM 7. Cette dernière constitue le buffer tampon du codec, dans lequel sont stockées notamment les données audio reçues à travers l'interface série et encodées ou reçues à travers un contrôleur de ligne de transmission HDLC 8 et à décoder. La RAM 7 est connectée à un bus de données 9, auquel sont également connectés un microprocesseur 10 et le contrôleur 8. Le bus 9 est également connecté à des circuit de traitement vidéo 16. Le microprocesseur 10 fournit l'horloge d'échantillonnage de 8 kHz, ainsi qu'une horloge trame de 30 ms au processeur 6 du codec.

Un circuit d'interruption 17 génère une interruption vers le processeur 6 lorsque le microprocesseur 10 a écrit un paquet audio encodé dans la RAM. De même, lorsque le processeur 6 écrit un paquet audio encodé dans la RAM, une interruption est générée à destination du microprocesseur 10.

L'interface série 5 comporte un buffer de sortie 23 lu et vidé à la fréquence de l'horloge d'échantillonnage et rempli par le processeur 6.

Le contrôleur de ligne de transmission HDLC 8 comporte deux piles de type FIFO, l'une pour la réception (pile 11), l'autre pour la transmission (pile 12). La lecture ou l'écriture dans les deux piles sont controlées par le microprocesseur 10. C'est également lui qui détermine le multiplexage des données audio, vidéo et autres. Les deux piles sont connectées d'une part au bus 9, d'autre part à des interfaces ligne HDLC 13 et 14. En émission, le rôle de l'interface HDLC est d'ajouter au flux de bits en provenance de la pile FIFO 12 des bits de bourrage pour éviter les combinaisons de bits identiques au drapeau d'identification des trames. En l'occurrence, le drapeau est constitué par le mot binaire "01111110". L'interface HDLC 13 aura pour rôle d'ajouter un bit "O" après toute séquence de cinq bits à "1". En réception, l'interface HDLC 14 élimine les bits de bourrage et restitue la séquence initiale.

Les piles FIFO 11 et 12 sont connectées au microprocesseur 10 à travers un circuit d'interruption 15, qui crée des interruptions lors de certaines conditions de remplissage des piles. Le circuit 15 peut activer une ou plusieurs interruptions. D'autre part, l'interface ligne en réception 14 possède un circuit de comparaison destiné à émettre un signal d'interruption à destination du microprocesseur 10 après la détection du drapeau d'identification d'une trame dans le flux de données et/ou après le premier octet suivant le drapeau d'identification. Ces signaux sont illustrés aux figures 1b et 1c.

Comme mentionné précédemment, le microprocesseur 10 a notamment pour rôle de fournir l'horloge d'échantillonnage de 8 kHz au reste du circuit. Lors d'une communication avec un second encodeur-décodeur audio d'un visiophone, le premier encodeur-décodeur utilise une horloge d'échantillonnage interne, la plus proche possible de 8 kHz, sans tenir compte des données reçues. Conformément à l'invention, ce sera alors au second encodeur-décodeur de se caler sur l'horloge du premier.

Lequel des deux encodeurs-récepteurs se calera sur l'autre est déterminé par un protocole qui n'est pas l'objet de la présente demande. Selon une variante, c'est l'appareil appelé qui se cale sur l'appareil appelant.

Selon un premier mode de réalisation, pour créer l'horloge d'échantillonnage à partir des signaux reçus, le microprocesseur 10 utilise le signal d'interruption généré par l'interface ligne HDLC 14. La période de ce signal est en effet proche de 30 ms, puisque le microprocesseur du visiophone émetteur force le début d'une nouvelle trame toutes les 30 ms précisément (à la précision de l'horloge interne d'échantillonnage près). Or, l'interface ligne HDLC en émission introduit par l'intermédiaire des bits de bourrage une gigue variant selon le contenu des trames. Néanmoins, la période moyenne du drapeau est bien de 30 ms.

Le microprocesseur comporte donc une boucle à verrouillage de phase 18 comprenant un comparateur de phase 21, un filtre de boucle 20 et une base de temps 19. La sortie de la base de temps 19 constitue l'horloge d'échantillonage et reboucle sur une entrée du comparateur de phase 21 à travers un diviseur par 240 (réalisé à l'aide d'un compteur) 22. La seconde entrée du comparateur de phase reçoit un signal généré par le microprocesseur 10 à partir du signal d'interruption de l'interface HDLC. Le signal envoyé vers la boucle est sensiblement celui de la figure 1c, au temps de traitement du microprocesseur près. Il n'est émis par le microprocesseur qu'après l'analyse de l'en-tête du paquet en cours. Il se peut en effet que des paquets ne contenant pas de données audio soient multiplexés avec les paquets de la figure 1a. L'analyse de l'en-tête permet de déterminer le type de données transportées par un paquet.

Selon une variante de ce mode de réalisation, une analyse des en-têtes est effectuée au niveau des interfaces HDLC, et une interruption n'est transmise au microprocesseur qu'au cas où l'en-tête indique la présence de données audio dans le paquet. L'analyse de l'en-tête est réalisée en amont du microprocesseur: le signal d'interruption de la figure 1c peut être transmis directement à la boucle à verrouillage de phase.

Le filtre de boucle 20 est un filtre passe-bas destiné à moyenner le signal à son entrée.

Ainsi, le microprocesseur génère l'horloge d'échantillonnage de 8 kHz et synchronise le codec audio du visiophone récepteur sur le codec audio du visiophone émetteur.

Selon une variante de réalisation, c'est le processeur 6 qui gère l'horloge d'échantillonnage.

Selon un second mode de réalisation de l'invention, l'horloge d'échantillonnage n'est pas générée directement à partir de la détection du drapeau d'identification de trame, mais en surveillant le niveau du buffer tampon de sortie du codec audio.

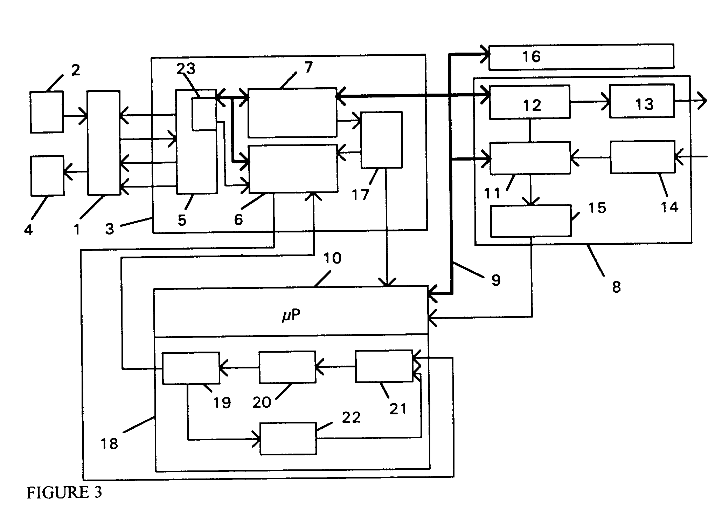

La figure 3 est un diagramme bloc d'un encodeur-décodeur générant l'horloge d'échantillonnage selon le second mode de réalisation de l'invention. Sur les figures 2 et 3, les mêmes éléments portent les mêmes références.

Dans le présent cas, le processeur 6 réalise une analyse du niveau du buffer de sortie 23. Cette analyse est déclenchée à chaque fois qu'un paquet de données audio est prêt à être décodé par le processeur 6, à savoir à chaque fois qu'un paquet de données audio a été démultipléxé à partir d'une trame complète et écrit dans la RAM 7.

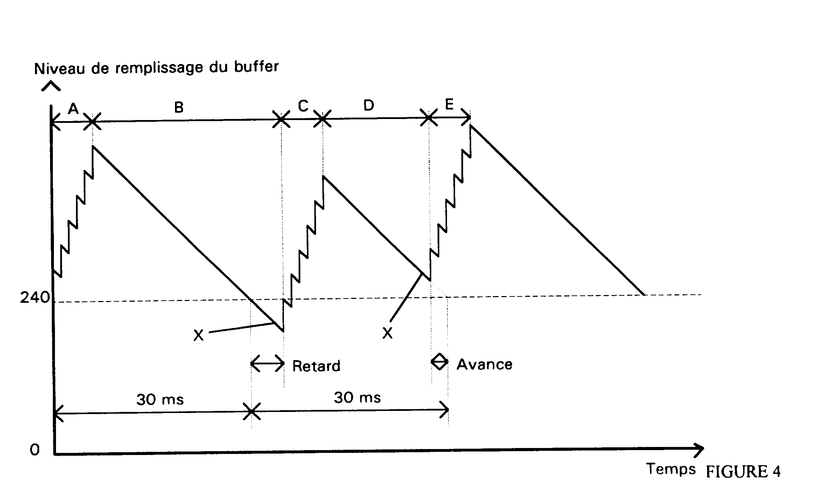

La figure 4 illustre l'évolution du niveau de remplissage du buffer en fonction du temps. Pendant les périodes A, C et E, le processeur 6 décode et écrit 6 sous-paquets de 40 octets chacun. Entre l'écriture de deux sous-paquets, la lecture du buffer se poursuit, ce qui explique l'apparence en dents de scie de la courbe. Lors des périodes B et D, il n'y a pas d'écriture dans le buffer, le niveau de remplissage baisse donc continuellement. L'analyse de niveau de buffer se fait aux points X. Les variations en ordonnée du point X s'expliquent par la gigue introduite par les bits de bourrage. Le paquet reçu pendant le segment B comporte plus de bits de bourrage que la moyenne des paquets: le signal déclenchant l'analyse du remplissage du buffer est retardé d'autant. De façon similaire, le paquet reçu pendant le segment D comporte moins de bits de bourrage que la moyenne des paquets.

Après déclenchement de l'analyse, le processeur 6 détermine le niveau de remplissage du buffer et le compare à un seuil donné. Si le niveau de remplissage du buffer est situé au dessus de ce seuil, alors le processeur 6 envoie un signal de correction à la boucle à verrouillage de phase 18 pour accélérer l'horloge d'échantillonnage. Si le niveau de remplissage du buffer est situé en dessous du seuil, alors le signal de correction aura pour effet de ralentir l'horloge d'échantillonnage.

Selon le présent exemple de réalisation, le buffer 23 a une taille correspondant à deux paquets de données audio décodées, à savoir 480 octets. On choisit un seuil de comparaison égal à 240 octets. Ceci étant dit, le choix du seuil peut être tout à fait différent et ne se situe pas obligatoirement à la moitié du niveau maximal du buffer.

Le buffer 23 étant organisé en boucle et étant adressé en lecture et en écriture grâce à un pointeur lecture et un pointeur écriture indépendants, le niveau de remplissage du buffer peut être déterminé en faisant la différence entre le pointeur d'écriture et le pointeur de lecture.

Selon le présent exemple de réalisation, la différence entre le pointeur d'écriture et le pointeur de lecture est évaluée lorsqu'un nouveau paquet audio est prêt à être décodé, c'est à dire lorsqu'il vient d'être inscrit par le microprocesseur 10 dans la RAM 7. Une comparaison entre cette différence et le seuil précédemment fixé détermine la correction à apporter. Une différence supérieure à 240 octets fera augmenter la fréquence de l'horloge, et vice-versa.

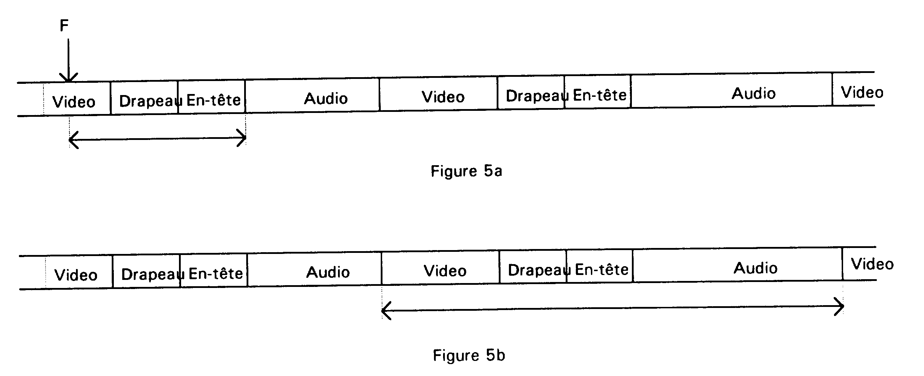

La période du signal déclenchant l'analyse du niveau du buffer est comme précédemment d'environ 30 ms, une gigue étant introduite par la présence de bits de bourrage lors de la transmission. Cependant, cette gigue est plus importante que dans le premier exemple de réalisation, le nombre de bits de bourrage formant la gigue pouvant être plus important. Ce phénomène est illustré par les figures 5a pour le premier exemple de réalisation et 5b pour le second exemple.

Dans le premier cas, on suppose qu'une interruption (référence F sur le schéma 5a) est générée lorsqu'un paquet audio est encodé dans l'émetteur. Cette interruption a pour effet de forcer le début d'un nouvelle trame, les données audio ayant priorité sur les données vidéo. Les données audio sont inscrites en début de trame, les données vidéo servant à remplir le reste de la trame disponible jusqu'à la disponibilite du prochain paquet audio encodé.

Or, l'interruption peut avoir lieu pendant l'émission d'un octet vidéo. On attend la fin de cet octet avant de faire débuter la trame HDLC suivante. L'interruption correspond à la période de référence de 30ms, comme cela a été expliqué ci-dessus. Au niveau du récepteur, l'impulsion destinée à la boucle à verrouillage de phase est générée en fin d'en-tête. Le nombre de bits entre la référence F et l'impulsion destinée à la boucle à verrouillage de phase est symbolisé par la double flèche sur la figure 5a. Le bourrage effectué par l'interface HDLC n'a lieu que sur l'en-tête et sur les derniers bits de l'octet vidéo pendant lequel l'interruption F est apparue. On peut prendre un exemple numérique en supposant que le drapeau et l'en-tête (avant bourrage) soient constitués d'un octet. Dans le meilleur des cas (pas de bits de bourrage et une interruption ayant lieu en fin du dernier octet vidéo de la trame précédente), 16 bits se situent entre la référence F et l'impulsion destinée à la boucle à verrouillage de phase. Dans le pire des cas, ce nombre de bits est de 27. La gigue peut donc avoir une valeur maximale de 11 bits.

Dans le cadre du second exemple de réalisation, le calcul est différent. En effet, le récepteur déduit ses références à partir des fins de paquets audio à l'intérieur d'une trame. Si l'on considère des paquets audio de longueur de 24 bits (débit de 6.4 kbits/s réservé pour les données audio), alors la gigue peut aller jusqu'à 48 bits.

Selon un mode de réalisation particulier du second exemple de réalisation, le moyennage réalisé sur les impulsions destinées à la boucle à verrouillage de phase lors de l'implémentation du second exemple de réalisation est plus fort que pour le premier exemple de réalisation, ceci dans le but de réduire l'influence de la gigue plus importante.

Ce moyennage peut être réalisé par un filtre passe-bas en amont de la boucle à verrouillage de phase. Notamment, on réalise sur plusieurs trames une moyenne des différences entre le pointeur de lecture et d'écriture lors de la mise en oeuvre du second exemple de réalisation.

Selon un mode de réalisation particulier, on met en oeuvre le premier exemple de réalisation de l'invention au niveau d'un récepteur lorsque l'émetteur donne la priorité aux paquets audio encodés comme expliqué ci-dessus (transmission d'une nouvelle trame HDLC après interruption causée par la fin de l'encodage d'un paquet audio). Si ce n'est pas le cas, le second exemple de réalisation est utilisé, mais une utilisation autonome de ce second exemple est également possible.

Enfin, si les exemples de réalisation mettent en avant des paquets audio, des trames d'un autre type peuvent également être utilisés de façon similaire. Le choix d'un paquet de type audio pour effectuer la synchronisation d'horloges est lié au fait qu'une de ces trames correspond à un nombre connu d'échantillons une fois décodée: ici, la durée de l'ensemble des échantillons d'une trame est toujours de 30ms (à la précision de l'horloge d'échnaitllonnage de l'émetteur près).

## Revendications

1. Procédé de synchronisation d'horloges caractérisé en ce que, dans un système comportant un décodeur numérique d'un récepteur muni d'une horloge d'échantillonnage et un encodeur numérique d'un émetteur également muni d'une horloge d'échantillonnage, ledit procédé comprend les étapes:
au niveau de l'émetteur, de codage par paquets d'échantillons d'un signal par intervalles de temps de durée déterminée,
de déclenchement de l'émission d'une trame de données lorsqu'un paquet de données est prêt à être émis,
au niveau du récepteur, de détection dudit début de trame et
de génération d'un signal de référence suite à ladite détection, ledit signal étant employé pour corriger l'horloge (18) du récepteur.

2. Procédé selon la revendication 1, caractérisé en ce que ledit signal échantillonné est un signal audio.

3. Procédé selon la revendication 2, caractérisé en ce que la détection de la fin de l'encodage d'un paquet de données audio déclenche l'interruption de la transmission d'une trame précédente et l'émission d'une nouvelle trame.

4. Procédé selon l'une des revendications 2 ou 3, caractérisé en ce qu'une trame comprend au moins un drapeau d'identification de trame, un en-tête et un paquet de données audio.

5. Procédé selon la revendication 4, caractérisé en ce que ladite détection du début de trame est réalisée par la détection dudit drapeau d'identification.

6. Procédé selon la revendication 5, caractérisé en ce que ledit signal de référence n'est généré que si l'analyse de l'en-tête ou d'un autre élément de la trame révèle qu'elle contient des données audio.

7. Procédé selon l'une des revendications 2 à 6, caractérisé en ce que ledit signal de référence est une impulsion envoyée à une boucle de verrouillage de phase (18 à 22) délivrant ladite horloge.

8. Procédé selon la revendication 7, caractérisé en ce que des bits de bourrage étant introduits dans la trame lors de la transmission et éliminés après réception, les signaux de référence subissent un filtrage passe-bas en amont de la boucle à verrouillage de phase.

9. Procédé de synchronisation d'horloges caractérisé en ce que, dans un système comportant un décodeur numérique d'un récepteur muni d'une horloge d'échantillonnage et un encodeur numérique d'un émetteur également muni d'une horloge d'échantillonnage, l'émetteur émettant des trames contenant paquets de données correspondant à un nombre connu d'échantillons, ledit procédé comprend les étapes:
dans le récepteur
- de réception d'une trame de données comprenant un paquet de données,
- de décodage dudit paquet et d'écriture des données décodées dans une mémoire (23),
- de lecture desdites données décodées dans ladite mémoire (23) à une fréquence fonction de la fréquence de ladite horloge du décodeur,
- de comparaison de l'état de remplissage de ladite mémoire (23) par rapport à un seuil à un instant déterminé des données dans ladite mémoire (23),
- de correction de ladite horloge (18) du décodeur en fonction du résultat de ladite comparaison.

10. Procédé selon la revendication 9, caractérisé en ce que les paquets de données correspondant à des échantillons d'un signal audio échantillonné à la fréquence de l'horloge d'échantillonnage de l'émetteur.

11. Procédé selon la revendication 10, caractérisé en ce que ledit instant déterminé est choisi indépendamment de l'horloge d'échantillonnage du récepteur.

12. Procédé selon la revendication 10 ou 11, caractérisé en ce qu'une trame de données comprend un drapeau d'identification de trame, un en-tête et un paquet de données audio.

13. Procédé selon l'une des revendications 10 à 12, caractérisé en ce que ledit seuil de comparaison correspond à la taille d'un paquet audio décodé.

14. Procédé selon la revendication 13, caractérisé en ce que la taille de la mémoire (23) correspond à la taille de deux paquets de données audio décodées.

15. Procédé selon l'une des revendications 10 à 14, caractérisé en ce que l'état de remplissage de la mémoire (23) est déterminé en faisant la différence entre un compteur d'écriture et un compteur de lecture associés à ladite mémoire (23).

16. Procédé selon l'une des revendications 10 à 15, caractérisé en ce que l'instant auquel ladite comparaison est effectuée est l'instant où le paquet de données audio est prêt à être décodé.

17. Procédé selon l'une des revendications 10 à 16, caractérisé en ce que ladite correction a pour effet de ralentir l'horloge (18) lorsque l'état de remplissage de la mémoire (23) est en dessous dudit seuil et de l'accélérer lorsque l'état de remplissage du buffer est au dessus dudit seuil.

18. Procédé selon la revendication 17, caractérisé en ce que l'horloge du récepteur est générée par une boucle à verrouillage de phase (18 à 22).

19. Dispositif de réception de signaux audio numériques caractérisé en ce qu'au niveau de l'émetteur, un codage par paquets d'échantillons d'un signal est réalisé, chaque paquet correspondant à un nombre connu d'échantillons, le déclenchement de l'émission d'une trame de données étant réalisé lorsqu'un paquet de données est prêt à être transmis,
ledit dispositif comprenant:
un circuit de détection (14) du début d'une trame de données comportant un desdits paquets,
un circuit de génération (10) d'un signal de référence à partir de ladite détection,
une horloge (18) corrigée par ledit signal de référence.

20. Dispositif selon la revendication 19, caractérisé en ce que ledit circuit de détection (14) comprend un circuit de comparaison entre les données recues et un drapeau d'identification de trame contenu dans lesdites trames.

21. Dispositif selon l'une des revendications 19 ou 20, caractérisé en ce que lesdits échantillons sont des échantillons d'un signal audio échantillonné.

22. Dispositif selon l'une des revendications 20 à 21, caractérisé en ce que ledit circuit de génération comprend un microprocesseur (10) générant une impulsion en cas de détection d'un drapeau d'identification de trame, si l'en-tête de la trame indique qu'elle contient un desdits paquets.

23. Dispositif selon l'une des revendications 20 à 22, caractérisé en ce que ledit circuit de génération comprend un circuit de comparaison, suite à la détection d'un drapeau d'identification de trame, entre l'en-tête d'une trame et une ou plusieurs valeurs particulières dudit en-tête indiquant que la trame contient des paquets de données audio, le signal de référence comprenant une impulsion générée lorsque ladite comparaison est positive.

24. Dispositif selon l'une des revendications 19 à 23, caractérisé en ce que ladite horloge du dispositif de réception comprend une boucle à verrouillage de phase (18) dont l'entrée reçoit ledit signal de référence, ladite boucle comprenant un diviseur (22) dans sa boucle de retour, le facteur de division dudit diviseur étant égal au produit entre la durée des échantillons d'un paquet de données audio et la fréquence de l'horloge de l'émetteur.

25. Dispositif selon l'une des revendications 19 à 24 caractérisé en ce qu'il met en oeuvre le procédé selon l'une des revendications 1 à 8.

26. Dispositif de réception de signaux numériques caractérisé en ce qu'
au niveau de l'émetteur, un codage par paquets d'échantillons d'un signal est réalisé, chaque paquet correspondant à un nombre identique d'échantillons,
ledit dispositif comprenant:
- des moyens de décodage (6) desdits paquets,
- des moyens d'écriture (6) des échantillons décodés dans une mémoire (23),
- des moyens de lectures (5) desdits échantillons dans ladite mémoire (23),
- des moyens de comparaison (6), à des instants déterminés, de l'état de remplissage de ladite mémoire (23) par rapport à un seuil,
- des moyens de correction (6) de l'horloge (18) du récepteur en fonction du résultat de ladite comparaison.

27. Dispositif selon la revendication 26, caractérisé en ce que lesdits échantillons sont des échantillons d'un signal audio.

28. Dispositif selon la revendication 26 ou 27, caractérisé en ce que la comparaison est effectuée à des instants indépendants de ladite horloge d'échantillonnage.

29. Dispositif selon l'une des revendication 26 à 28, caractérisé en ce que la fréquence de lecture des échantillons décodés dans la mémoire (23) est la fréquence de l'horloge d'échantillonnage.

30. Dispositif selon l'une des revendications 26 à 29, caractérisé en ce que lesdits moyens de décodage, d'écriture et de comparaison comprennent un processeur de traitement du signal (6).

31. Dispositif selon l'une des revendications 26 à 30, caractérisé en ce que l'horloge d'échantillonage du récepteur est générée à partir d'une boucle à verrouillage de phase (18).

32. Dispositif selon l'une des revendications 26 à 31, caractérisé en ce qu'il met en oeuvre le procédé conforme à l'une des revendications 9 à 18.
